# EUROPEAN PATENT APPLICATION

(11) **EP 2 790 306 A2**
(43) Date of publication of application: **15.10.2014**
(21) Application number: 14163662.1
(22) Date of filing: 07.04.2014
(51) Int. Cl.: H02K 16/00, H02K 9/02

(54) **Rotor-linear actuator**

(30) Priority: 08.04.2013 IT BO20130151
(71) Applicant: Nise S.r.l., 40012 Calderara di Reno (Bologna) (IT)
(72) Inventor: Gavesi, Marco, 40121 Bologna (IT)
(74) Representative: Firmati, Leonardo

(57) **Abstract**

Described is a roto-linear actuator comprising: a linear movement unit (2), having at least one translation shaft (4), a rotary movement unit (8), having at least one rotation shaft (10) and a joint (16) interposed between the movement units (2, 8) for coaxially engaging the rotation shaft (10) with the translation shaft (4), the rotation shaft (10) having at least one longitudinal groove (13) coupled mechanically with a rotor (12) of the rotary movement unit (8). [Figure 1]

## Description

This invention relates to a roto-linear actuator.

More specifically, this invention relates to a roto-linear actuator of an electric type, which is able to impart a combined translational and rotational movement to a shaft.

As known, the roto-linear actuators of the electric type are mainly used in the automation field, preferably for precision operations, or in general in all the sectors of use where the movement of a tool is required with a linear movement, that is, along a rectilinear direction with a to and fro motion, and at the same time rotating about an axis corresponding to the above-mentioned rectilinear direction.

As is known, roto-linear actuators comprise a linear electric motor, designed to translate a respective shaft along a rectilinear direction. The linear electric motor comprises a primary static winding, extending around the shaft, which in turn has a series of permanent magnets. Due to the interaction between the magnetic field generated by the primary winding and the permanent magnets, the shaft is moved along its longitudinal extension (linear movement) with a to and fro motion. There is also an encoder acting on the shaft, to measure and adjust the translation of the shaft.

The linear electric motor is suitably coupled to a rotary electric motor for transferring the rectilinear movement (defined by the shaft with permanent magnets) to a respective rotor.

Consequently, there is a combined movement of the rotation shaft coupled with the rotor determined by the rotation about its longitudinal axis of extension and by the translation action of the shaft of the linear motor. Generally, the linear and rotary electric motors are positioned alongside each other with the respective translation and rotation axes parallel to each other. The translation shaft is coupled by means of systems to transfer the movement to the rotary electric motor in order to translate the respective rotor.

These actuators, although they are able to move the shaft of the rotary motor in a roto-linear fashion, are very bulky and cannot therefore be used for particular structures in which the application spaces are particularly small.

There are also very compact roto-linear actuators, and therefore with small dimensions, wherein the translation and rotation shafts are coupled coaxially with each other.

In this case, the rotary electric motor comprises a stator positioned around the rotation shaft which in turn has a series of permanent radial magnets, that are able to interact with the magnetic field produced by the windings of the stator.

The rotation shaft therefore constitutes the rotor of the rotary electric motor and, due to the effect of the arrangement of the radial magnets, it is rotated about the respective longitudinal axis.

There are also connection means comprising bearings which join the translation shaft of the electric motor with the rotation shaft (rotor) at the respective ends of the shafts.

Consequently, the rotation shaft (rotor) is moved with a combined roto-translational movement due to its respective rotation and the action of the translation shaft transferred directly by the joint bearings.

This type of actuator, even though it is very compact, with small dimensions, still has important drawbacks, mainly linked with the structural complexity of the rotary electric motor. This complexity derives from the presence of the permanent radial magnets, which make the production of the shaft very complicated and therefore costly.

The prior patent US 6081051 indicates a roto-linear motor of known type, which although it partly resolves the above-mentioned drawbacks, is not itself free from drawbacks.

The roto-linear motor described in this document has two coaxial shafts, with the external rotary shaft extending longitudinally above the internal translating shaft. This embodiment implies a considerable constructional complexity, in particular in production of an external shaft which is perforated internally.

Moreover, the considerable longitudinal extension of the internal shaft adversely affects the performance of the actuator considerably.

In this context, the technical purpose which forms the basis of this invention is to propose a roto-linear actuator which overcomes the above mentioned drawbacks of the prior art.

More specifically, the aim of this invention is to provide a roto-linear actuator which is compact, with small dimension, and at the same time is structurally simple and inexpensive.

The above-mentioned technical problem is resolved by a roto-linear actuator comprising the technical characteristics of the attached claim 1. More specifically, the rotation shaft, which is coaxially coupled with the translation shaft, is equipped with at least one longitudinal groove coupled mechanically to a rotor of the rotary movement unit.

Further features and advantages of this invention are more apparent in the detailed description below, with reference to a preferred, non-restricting, embodiment of a roto-linear actuator as illustrated in the accompanying drawings, in which:
- Figure 1 is a side view of a roto-linear actuator according to the invention;
- Figure 2 is a side view in cross-section along the line II - II of the actuator of Figure 1;
- Figure 3 is an exploded perspective view of the roto-linear actuator of Figure 1;
- Figure 4 shows a side view of a construction detail of the roto-linear actuator of Figure 1;
- Figure 5 is a side view in cross-section along the line V - V of the construction detail of Figure 4; and
- Figure 6 is a side view in cross-section of the actuator according to a further embodiment;
- Figure 7 is a side view of a roto-linear actuator according to a further embodiment.

With reference to the accompanying drawings, the numeral 1 indicates a roto-linear actuator according to this invention.

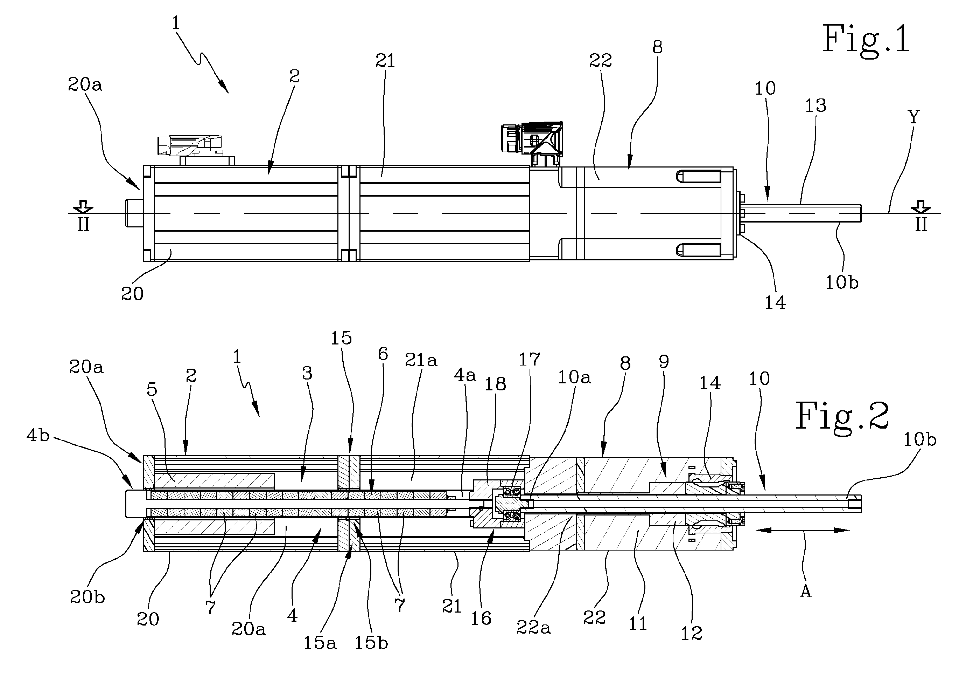

The actuator 1 comprises a linear movement unit 2, preferably having a linear electric motor 3 which is illustrated in more detail in the cross-section of Figure 2.

The electric motor 3 is equipped with a translation shaft 4 magnetically associated inside a respective primary winding 5 which is not described in detail since it is of known type.

The translation shaft 4 comprises a tube 6 of permanent magnets 7 positioned next to each other. Consequently, the magnets 7 interact with the magnetic field generated by the primary winding 5 to move the shaft 4 along a rectilinear direct A and with a to and fro motion.

The actuator 1 also comprises a rotary movement unit 8, comprising an electric motor 9 designed to rotate a respective shaft 10 about its longitudinal axis of extension "Y".

More specifically, the rotary electric motor 9, which is not described in detail since it is of known type, has a stator 11 and a rotor 12 rotatably associated inside the stator 11 (Figure 2).

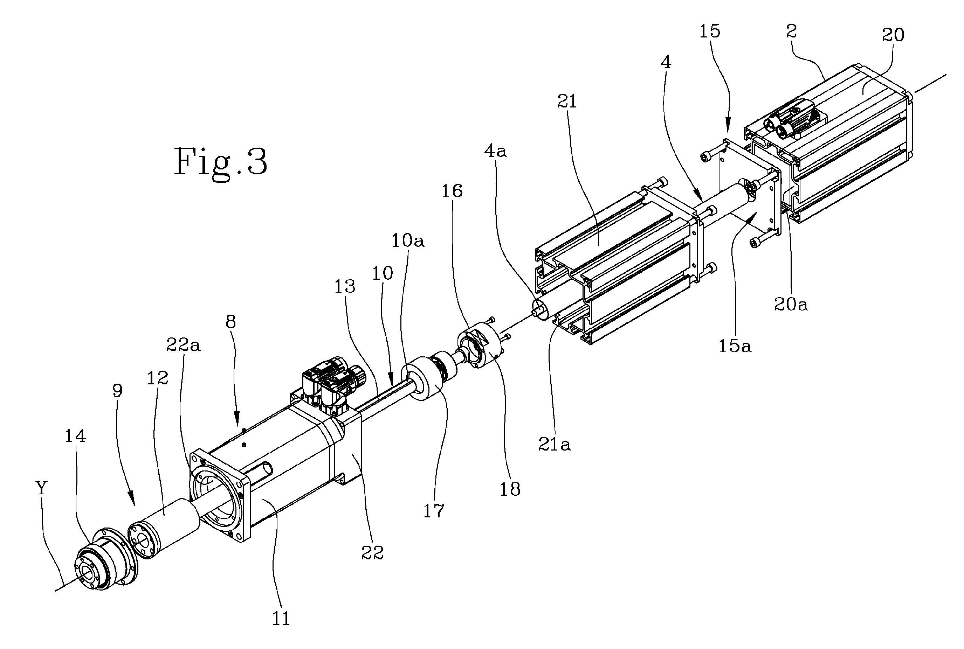

The rotor 12 is substantially annular in shape and is positioned coaxially about the rotation shaft 10. In this situation, as shown in Figures 2 and 3, the rotation shaft 10 is inserted in the rotor 12 to slide inside it along the rectilinear direction "A".

In effect, the rotation shaft 10 has at least one longitudinal groove 13 made on the respective outer surface and coupled in a mechanical fashion with the rotor 12 around the shaft 10.

Advantageously, the mechanically coupling allows the rotor 12 to rotate the shaft 10 about the relative axis "Y".

The mechanical coupling between rotor 12 and shaft 10 is given in particular by a guide element (not shown in detail in the accompanying drawings), protruding from a respective annular surface inside the rotor 12 and housed in the above-mentioned longitudinal groove 13 of the rotation shaft 10.

In this way, the guide element housed in the groove 13 rotates the shaft 10 with the rotation imparted by the rotor 12.

Moreover, the guide element is slidable along the groove 13 also allowing the shaft 10 a rectilinear movement along the direction "A" and imposed by the translation shaft 4 as described in more detail below.

In this situation, the guide element constitutes a mechanical constraint in the rotation of the rotation shaft 10 and at the same time allows the rectilinear movement of the rotation shaft 10 sliding in the groove 13. Preferably, there are appropriate systems for reducing the friction to allow the sliding of the guide element inside the groove 13.

With reference to Figures 1 to 3, it should be noted that the rotary movement unit 8 also comprises a bearing 14, located around the rotation shaft 10 and alongside the rotary electric motor 9. The bearing 14 is keyed to the rotor 12 and with it. The bearing 14 also acts in conjunction with the rotary shaft 10 for rotating it and at the same time allowing the translation movement. In other words, the bearing 14 (preferably of the ball type) favours the translational movement of the shaft by means of a system of anti-friction balls sliding along the direction of translation. At the same time, the bearing 14 has a fixed part and a rotary part, connected to the fixed part by means of the balls and designed to rotate the shaft.

The actuator 1 also comprises a joint 16 interposed between the movement units 2, 8 for coaxially engaging the rotation shaft 10 with the translation shaft 4.

In more detail, the joint 16 is designed to associate a first end 4a of the translation shaft 4 with a first end of the rotation shaft 10.

The joint 16 transfers the translating motion along the direction "A" from the translation shaft 4 to the rotation shaft 10.

Advantageously, the joint 16 comprises a twin crown bearing 17, preferably a bearing with balls in oblique contact, to dissociate the rotational movement of the rotation shaft 10 from the translation shaft 4.

In other words, the bearing 17 connects the two shafts 4, 10 only for transferring the linear movement along the direction "A". The rotation of the rotation shaft 10 is not transferred to the translation shaft 4 so as to guarantee the correct orientation of the permanent magnets 7 with respect to the magnetic field generated by the primary winding 5.

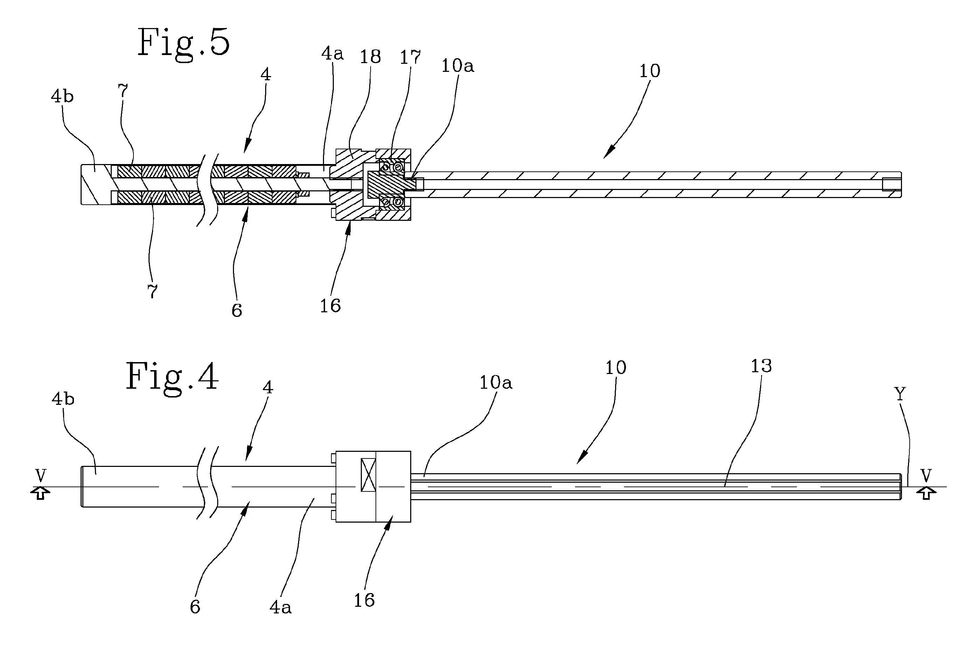

The bearing 17 is interposed between the first end 10a of the rotation shaft 10 and a containment body 18 which is substantially cylindrical and associated with the first end 4a of the rotation shaft 4. More specifically, with reference to Figure 5, it should be noted that the containment body 18 comprises inside it the first end 10a of the rotation shaft 10 and the above-mentioned bearing 17 which makes the shaft 10 rotatable relative to the containment body 18.

Preferably, each movement unit 2, 8 and the joint 16 are housed inside respective external containment frames 20, 21, 22.

Each external frame 20, 21, 22 is substantially box-shaped to contain inside the movement unit 2, 8 or the joint 16. Furthermore, the frames 20, 21, 22 can be coupled together in a modular fashion to make the replacement of at least one module versatile and easy.

In this way, the actuator is mounted on the basis of the functional characteristics of the individual modules which can be associated and disassociated with each other rapidly and by using connection systems of known type.

As illustrated in particular in the Figure 2, 3 and 6, the actuator 1 comprises means 15 for intermediate support of the translation shaft 4, designed to prevent bending of the shaft 4.

The above-mentioned supporting means 15 comprise a transversal wall 15a at right angles to the axis Y, the wall having a central hole, coaxial with the axis Y. A bearing 15b is mounted inside the hole, supported, therefore, by the wall 15a, the translation shaft 4 being engaged in a sliding fashion with the bearing 15b.

The translation shaft 4 has a second end 4b longitudinally opposite the above-mentioned first end 4a.

The end 4a of the shaft 4 is positioned close to an end wall 20a of the containment frame 20.

In a similar fashion to the above-mentioned wall 15 the end wall 20a is also at right angles to the axis Y and has a central hole, coaxial with the axis Y. A bearing 20b is mounted inside the hole, engaging in a sliding fashion with the second end 4b of the translation shaft 4

The bearing 20b is also advantageously made of plastic material since it must only support the axial sliding of the end 4b of the shaft 4. Advantageously, it must also be noted that all the components are protected and contained in the three containment frames 20, 21, 22 which constitute a single compact block. The rotation shaft 10 has a second end 10b that can be coupled to a user device which must be moved according to a roto-translational movement which therefore protrudes outside the respective containment frame 22.

Further, the actuator also has an air type cooling system, associated with the movement units 2, 8 and the coupling means 15.

The cooling system is made in each external frame 20, 21, 22 for cooling respective containment chambers 20a, 21 a, 22a of the movement units 2, 8 and the joint 16, made inside corresponding external frames 20, 21, 22. The air type cooling system allows the passage of a cooling fluid through the external frames 20, 21, 22 to cool the electric motors 3, 9 and in general all the technical elements which are moving and subject to overheating.

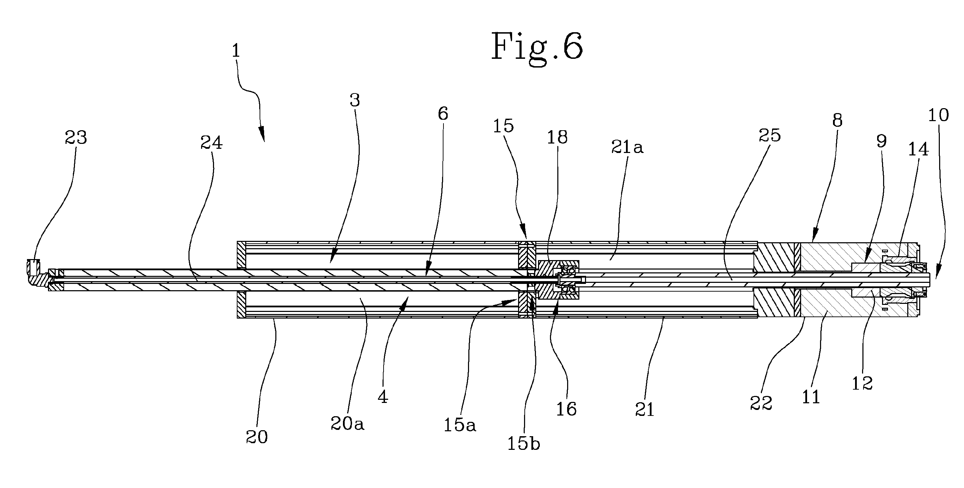

According to another embodiment shown in Figure 6, the translation shaft 4 and the rotation shaft 10 have internally respective channels 24, 25 for the passage of air which are in fluid communication with each other. More specifically, the channels 24, 25 extend along the longitudinal extension of the respective shafts and are in communication by means of the joint 16 which in this case is hollow and comprises a bearing with a double lip seal. In this situation, the translation shaft 4 has an end located outside the linear motor and equipped with a manifold 23 designed to be coupled to a suction machine (not illustrated).

This solution finds particular use in applications such as the capping of containers where a passage of air is required that, by suction, holds a respective cap with a negative pressure.

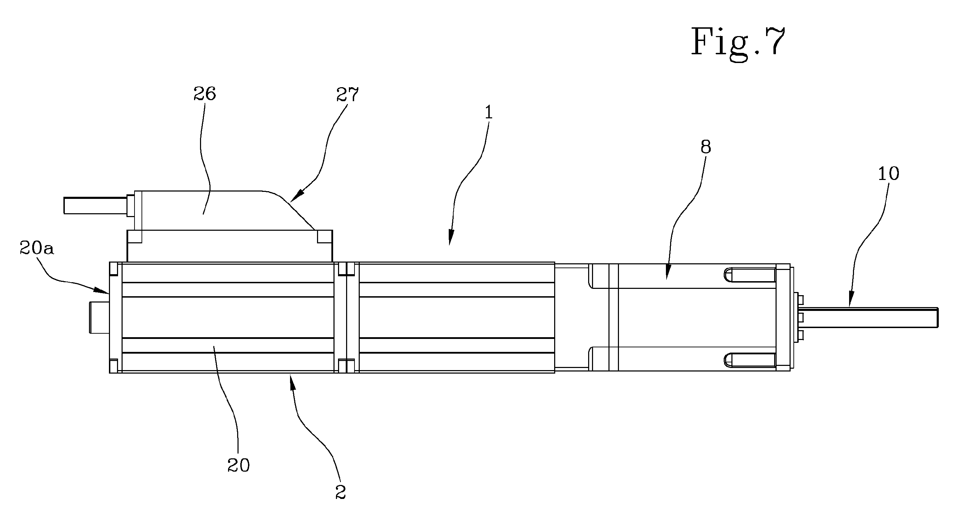

As illustrated in Figure 7, in a particular embodiment, the roto-linear actuator 1 comprises means 26 for electronic drive and control of the movement means 2, 8, the means being supported directly by the external containment frame 20.

In detail, the actuator 1 comprises a box 27 for housing the electronic drive and control means, the box 27 being mounted stably on the external containment frame 20.

This embodiment has been found to be particularly advantageous in machines for capping bottles in which use is normally made of mechanical cam systems combined with rotary motors for the closing operation. The translation of the closing motor (rotary) is performed using the mechanical cam and this approach implies considerable complications and greatly limits the performance.

These drawbacks are advantageously overcome with the use of the roto-linear motor described above.

In effect, in this type of application the actuators are mounted on rotary carousels. All the cabling systems (power and encoder cables) of the actuators must therefore be carried by the drive means located in the electrical cabinet on the carousel using sliding type contacts, so the more actuators there are the greater will be the number of cables on the carousel.

In order to simplify this configuration, the roto-linear actuator 1 (see Figure 7) is equipped with integrated electronic drive and control means designed to control both the linear movement unit 2 and the rotary movement unit 8 minimising the number of cables coming from the electrical cabinet. Moreover, the number of sliding contacts on the carousel is also reduced to a minimum.

The roto-linear actuator 1 described above therefore brings important advantages.

Firstly, the coaxial coupling in series of the shafts 4, 10 defines an efficient configuration which is at the same time very compact with small dimensions.

This configuration is determined by the joint 16 that connects the shafts 4, 10 together along the longitudinal axis but disassociates the rotational movement of the rotation shaft 10 from the translation shaft 4.

Moreover, the mechanical coupling between rotor 10 and grooved rotation shaft 12 is structurally very simple and inexpensive. In effect, the standard configuration of the rotary electric motor 9 is maintained without having to replace the rotation shaft 10 with any shafts with permanent magnets. Another advantage linked with the layout in series of the two shafts 4 and 10 (that is, without interpenetration, thereby containing the longitudinal extension of the translation shaft 4), is due to the fact that a reduced translating mass (of the shaft 4) for the same peak force delivered by the linear motor allows greater accelerations to be obtained, thus increasing the performance of the roto-linear actuator.

A further advantage of the roto-linear actuator according to this invention is due to the use of a tubular linear electric motor 3, that is, free of transmission based on male-and-female screw coupling, with the consequent friction, construction difficulties and the need for lubrication. Another advantage is due to the presence of the means 15 for intermediate support of the translation shaft 4, which allows actuators to be also made with long linear strokes preventing bending and oscillations of the shaft 4.

A further advantage of the actuator 1 according to this invention derives from the modular nature of the movement units 2, 8 and of the joint 16 which can be easily replaced by assembly/dismantling of the respective external containment frames 20, 21, 22.

Another advantage of the actuator 1 according to this invention is that the linear electric motor 3 can be disconnected from the actuator 1 in its entirety and easily replaced. This feature is useful, for example, when maintenance is performed or also when the motor must be replaced with one of a larger size if it is necessary to increase the performance of the machine in which the actuator is installed. This feature may not be used where, in the prior art actuators, the roto-linear actuator is made in a single block and therefore, even if only one of the two parts is broken (rotary motor or linear motor) one is forced to replace the entire unit.

Another advantage linked with the actuator according to this invention is that the joint 16 is made with a substantially airtight pressurised seal.

In effect, the uncoupling joint 16 allows an airtight seal under a negative pressure or with pressurised fluid.

## Claims

1. A roto-linear actuator, comprising:
a linear movement unit (2), comprising a linear electric motor (3) and
having at least one translation shaft (4);
a rotary movement unit (8), having at least one rotation shaft (10); the translation and rotation shafts (4, 10) being positioned in series adjacent with each other,
a joint (16) interposed between the movement units (2, 8) for coaxially engaging the rotation shaft (10) with the translation shaft (4) transferring the translating motion from the translation shaft (4) to the rotation shaft (10), the joint (16) comprising a bearing (17) for disassociating the rotational motion of the rotation shaft (10) from the translation shaft (4).
**characterised in that** the rotation shaft (10) has at least one longitudinal groove (13) coupled mechanically with a rotor (12) of the rotary movement unit (8).

2. The actuator according to according to the preceding claim, **characterised in that** it comprises means (15) for intermediate support of the translation shaft (4), to prevent the bending of the shaft (4).

3. The actuator according to the preceding claim, wherein the shafts (4, 10) have a shared axis (Y) of longitudinal extension, **characterised in that** the intermediate supporting means (15) comprise a transversal wall (15a) at right angles to the axis (Y) and a bearing (15b) supported by the wall and with which the translation shaft (4) engages in a sliding fashion.

4. The actuator according to claim 3, **characterised in that** the bearing (15b) is made of plastic material.

5. The actuator according to any one of the preceding claims, **characterised in that** the translation shaft (4) comprises a tube (6) of permanent magnets (7), inserted in a respective primary winding (5) of the linear electric motor (3) for being moved along a rectilinear direction (A) and with a to and fro motion.

6. The actuator according to any one of the preceding claims, **characterised in that** the rotary movement unit (8) comprises a rotary electric motor (9) having a stator (11) active on the rotor (12); the rotor (12) having an annular shape and being positioned coaxially about the rotation shaft (10).

7. The actuator according to any one of the preceding claims, **characterised in that** the rotor (12) comprises a guide element, protruding from a respective internal annular surface and housed in the groove (13) of the rotation shaft (10); the guide element driving the shaft (10) during a rotation imparted by the rotor (12) and being slidable in the groove (13) during a translating motion imparted by the translation shaft (4).

8. The actuator according to any one of the preceding claims, **characterised in that** each movement unit (2, 8) and the coupling means (15) are housed inside respective external containment frames (20, 21, 22).

9. The actuator according to the preceding claim, **characterised in that** each external containment frame (20, 21, 22) can be coupled in a modular fashion to at least one adjacent frame.

10. The actuator according to claim 8 or 9, wherein the rotation shaft (10) comprises a second end (10b) that can be coupled to a user device which must be moved according to a roto-translational movement, **characterised in that** the end (10b) of the rotation shaft (10) protrudes outside the respective containment frame (22).

11. The actuator according to any one of the preceding claims, **characterised in that** it also comprises an air type cooling system, associated with the movement units (2, 8) and the coupling means (15).

12. The actuator according to the preceding claim when dependent on claim 8, **characterised in that** the cooling system is made in each external frame (20, 21, 22) for cooling respective containment chambers (20a, 21a, 22a) of the movement units (2, 8) and of the coupling means (15); each chamber (20a, 21 a, 22a) being defined by a respective frame (20, 21, 22).

13. The actuator according to any one of the preceding claims, **characterised in that** the translation shaft (4) and the rotation shaft (10) comprise respective air passage channels (24, 25), in fluid communication with each other using the coupling means (15).

14. The actuator according to any one of the preceding claims, **characterised in that** it comprises electronic means (26) for drive and control of the movement units (2, 8).

15. The actuator according to the preceding claim when it depends on claim 8, **characterised in that** it comprises a box (27) for housing the electronic drive and control means (26), the box being mounted stably on one of external containment frames (20, 21, 22).
